# EUROPEAN PATENT APPLICATION

(11) **EP 3 103 329 A1**
(43) Date of publication of application: **14.12.2016**
(21) Application number: 15398008.1
(22) Date of filing: 08.06.2015
(51) Int. Cl.: A01K 63/02

(54) **MOBILE TRAILER FOR GIANT AQUARIUM**

(71) Applicant: Malaca Tomas, Alexandre Manuel, 2440-040 Batalha (PT)
(72) Inventor: The designation of the inventor has not yet been filed
(74) Representative: Viegas Costa Paixão, Alexandra Maria

(57) **Abstract**

Mobile trailer for giant aquarium allowing fishing demonstrations, diving, various species of fish, TV shows, decorative aquarium with children fishing, fashion shows, concerts with water dogs, social events, interactive stage background, technological equipment demonstrations, survival suit, advertising videos, advertising space, workshops, etc., comprising a double biological filter, a water filtration with automatic oxygen system , ultra-violet lamps, sensory readings, lighting, decoration, electrical generator, a cooler/heater, sound and video equipment, crane support, office and fish tanks.

## Description

Giant Aquarium Trailer Mobile is the only mobile aquarium and allows the most varied type of uses including fishing demonstrations, diving, various species of fish, TV shows, decorative aquarium with children fishing, fashion shows, concerts with water dogs, social events, interactive stage background, technological equipment demonstrations, survival suit, advertising videos, advertising space, workshops, etc. Designed in accordance with European safety regulations, it can be adjusted to the customer's discretion, both in terms of decoration and presentation as well as in terms of technical characteristics.

Aspects of engineering and modeling have been studied and optimized, the objectives set, resulting in Aquarius Trailer Mobile Giant in a package that will certainly be appealing to the public.

### Technical Characteristics

Measures Giant Aquarium Trailer Mobile:
Overall structure - Length 14m x Width 2,60m x Height 3,25m;
Aquarium - Length 8m x Width 1,4m x Height 2m;(03)
Cubic Capacity - 22,000 liters;
The Giant Aquarium Trailer Mobile it's composed by:
   Double Biological Filter (08) - The Bottom Filter System, and the External Biological Filter, persist until nowadays, and may be declared that until now more than 80% of the professionals use and recommend this system. The Biological Filter is the one were beneficial bacteria formation exists, which help transforming some elements into others.

In general we may say that these bacteria keep the aquarium free from pollutants, for they transform these in less noxious elements.

Water filtration with automatic oxygen system incorporated.

Ultra-Violet Lamps (09), are part of the filtering system which kill the microorganisms, bacteria, protozoa and viruses, specially the suspended algae.

Water Analysis, Salinity control, Conductivity, 02, PH, KH, GH, NO2, NO3 control, as well as water temperature control in a safe and immediate way using digital reading.

Lighting(10), Metalo-Halogenous lighting controlled by a temporiser that allows the reproduction of the natural light of the environment.

Decoration, the decoration is changeable with the kind of use or may be adjusted to the clientes criterion.

Independent Electrical Generator (11), which will furnish electricity in an autonomous way, guaranteeing all the equipment's functions.

Cooler / Water Heater (12), it allows keeping the water in an ideal temperature for each activity.

Sound equipment (13), will allow an easier interlocution with the public, or run environment music.

Video equipment (14), which can be seen several images.

Crane support (05), for mobility and load-lifting, of the Fish transport tanks and large fish.

Office (01), for administrative support.

Special fish tanks transport (04), with autonomous oxygenation and filtration for logistical support fish.

Advertising Space (07), Structure and specific spaces for Advertising display with several measures.

LSS -Live Suporte System (06), autonomous system composed of generator, battery, charger, transformer / converter and life-sustaining oxygen compressor for fish ensuring the operation of essential equipment in case of power failure.

Stage for the Demonstrator (15).

Security protection (16) of the Stage to the Demonstrator.

Water Pump (02), pumping the water to the systems of: Filtering, Cooler / Water Heater, in and out water.

Storage Area (17).

### Description of the Figures

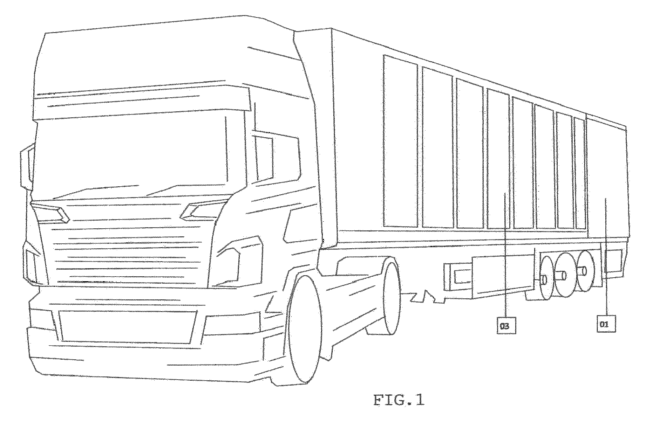

FIG. 1 - View Left Front Giant Aquarium Trailer Mobile.

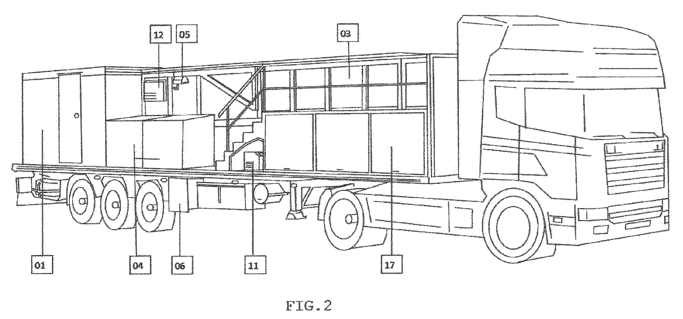

FIG. 2 - Rear View Giant Aquarium Trailer Mobile.

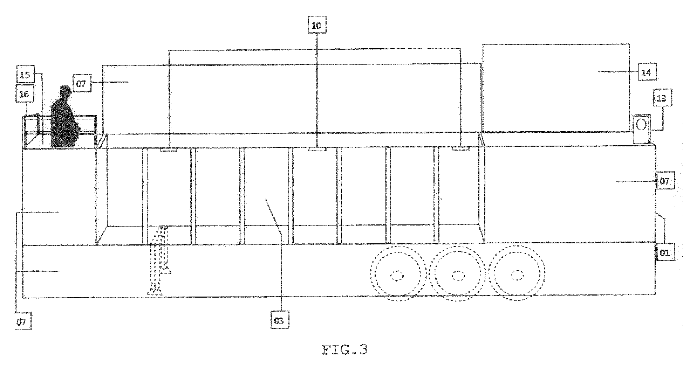

FIG. 3 - Front View Giant Aquarium Trailer Mobile.

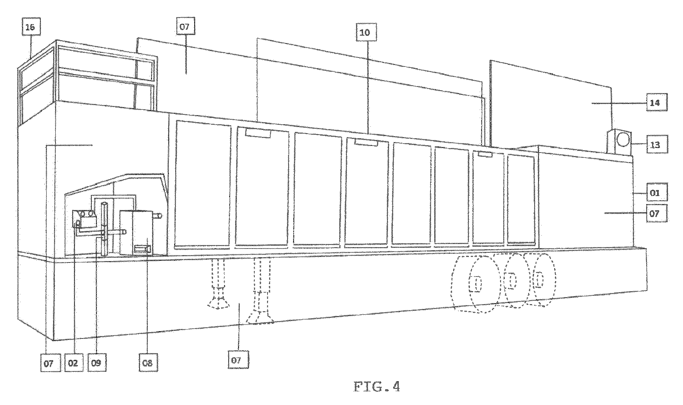

FIG. 4 - Front View and Side Left Giant Aquarium Trailer Mobile.

## Claims

1. st.Giant Aquarium Trailer Mobile is **characterized by** being the only mobile aquarium and allows the most varied type of uses including fishing demonstrations, diving, various species of fish, TV shows, decorative aquarium with children fishing, fashion shows, concerts with water dogs, social events, interactive stage background, technological equipment demonstrations, survival suit, advertising videos, advertising space, workshops, etc. Designed in accordance with European safety regulations, it can be adjusted to the customer's discretion, both in terms of decoration and presentation as well as in terms of technical characteristics.
Aspects of engineering and modeling have been studied and optimized, the objectives set, resulting in Aquarius Trailer Mobile Giant in a package that will certainly be appealing to the public.

2. nd.Giant Aquarium Trailer Mobile is **characterized by** the following measures:
Overall structure - Length 14m x Width 2,60m x Height 3,25m;
Aquarium - Length 8m x Width 1,4m x Height 2m; (03) Cubic Capacity - 22,000 liters;

3. rd.Giant Aquarium Trailer Mobile is **characterized by** Double Biological Filter (08) - The Bottom Filter System, and the External Biological Filter, persist until nowadays, and may be declared that until now more than 80% of the professionals use and recommend this system. The Biological Filter is the one were beneficial bacteria formation exists, which help transforming some elements into others. In general we may say that these bacteria keep the aquarium free from pollutants, for they transform these in less noxious elements.

4. th.Giant Aquarium Trailer Mobile is **characterized by** Water filtration with automatic oxygen system incorporated.

5. th.Giant Aquarium Trailer Mobile is **characterized by** Ultra-Violet Lamps (09), are part of the filtering system which kill the microorganisms, bacteria, protozoa and viruses, specially the suspended algae.

6. th.Giant Aquarium Trailer Mobile is **characterized by** Water Analysis, Salinity control, Conductivity, 02, PH, KH, GH, N02, NO3 control, as well as water temperature control in a safe and immediate way using digital reading.

7. th.Giant Aquarium Trailer Mobile is **characterized by** Lighting(10), Metalo-Halogenous lighting controlled by a temporiser that allows the reproduction of the natural light of the environment.

8. th.Giant Aquarium Trailer Mobile is **characterized by** Decoration, the decoration is changeable with the kind of use or may be adjusted to the clientes criterion.

9. th.Giant Aquarium Trailer Mobile is **characterized by** Independent Electrical Generator (11), which will furnish electricity in an autonomous way, guaranteeing all the equipment's functions.

10. th.Giant Aquarium Trailer Mobile is **characterized by** Cooler / Water Heater (12), it allows keeping the water in an ideal temperature for each activity.

11. th. Giant Aquarium Trailer Mobile is **characterized by** Sound equipment (13), will allow an easier interlocution with the public, or run environment music.

12. th. Giant Aquarium Trailer Mobile is **characterized by** Video equipment (14), which can be seen several images.

13. th. Giant Aquarium Trailer Mobile is **characterized by** Crane support (05), for mobility and load-lifting, of the Fish transport tanks and large fish.

14. th. Giant Aquarium Trailer Mobile is **characterized by** Office (01), for administrative support.

15. th. Giant Aquarium Trailer Mobile is **characterized by** Special fish tanks transport (04), with autonomous oxygenation and filtration for logistical support fish.

16. th. Giant Aquarium Trailer Mobile is **characterized by** Advertising Space (07), Structure and specific spaces for Advertising display with several measures.

17. th. Giant Aquarium Trailer Mobile is **characterized by** LSS -Live Suporte System (06), autonomous system composed of generator, battery, charger, transformer / converter and life-sustaining oxygen compressor for fish ensuring the operation of essential equipment in case of power failure.

18. th. Giant Aquarium Trailer Mobile is **characterized by** Stage for the Demonstrator (15).

19. th. Giant Aquarium Trailer Mobile is **characterized by** Security protection (16) of the Stage to the Demonstrator.

20. th. Giant Aquarium Trailer Mobile is **characterized by** Water Pump (02), pumping the water to the systems of: Filtering, Cooler / Water Heater, in and out water.

21. st. Giant Aquarium Trailer Mobile is **characterized by** Storage Area (17).
